# EUROPEAN PATENT APPLICATION

(11) **EP 1 427 127 A2**
(43) Date of publication of application: **09.06.2004**
(21) Application number: 03257352.9
(22) Date of filing: 21.11.2003
(51) Int. Cl.: H04L 1/18, H04L 1/16

(54) **Communication control method, communication system and communication apparatus that can improve throughput**

(30) Priority: 04.12.2002 JP 2002352837
(71) Applicant: SHINKO ELECTRIC INDUSTRIES CO. LTD., Nagano-shi, Nagano 380-0921 (JP)
(72) Inventor: Ikedo,Kenji, Shinko Electric Industries Co., Ltd, Nagano-shi, Nagano 380-0921 (JP)
(74) Representative: Mounteney, Simon James

(57) **Abstract**

A communication control method that controls packet communication between a transmitting communication apparatus (20) and a receiving communication apparatus (40). The method includes the steps of: transmitting to the receiving communication apparatus (40) from the transmitting communication apparatus (20) a plurality of packets in a consecutive manner; and when packets of the plurality of packets transmitted from the transmitting communication apparatus (20) to the receiving communication apparatus (40) are consecutively lost, reporting to the transmitting communication apparatus ,(20) from the receiving communication apparatus (40) the number of the consecutively lost packets.

## Description

### BACKGROUND OF THE INVENTION

### 1. Field of the Invention

The present invention relates to communication control methods applied when performing packet communication between communication apparatuses, and to communication systems and communication apparatuses that use the communication control methods.

### 2. Description of the Related Art

Conventionally, in communication using the TCP protocol, window control is adopted to control transmission confirmation and reception confirmation (acknowledge) during communication (flow control). In window control, a transmitting node can consecutively transmit packets to a receiving node without waiting for reception confirmation from the receiving node, thereby improving throughput.

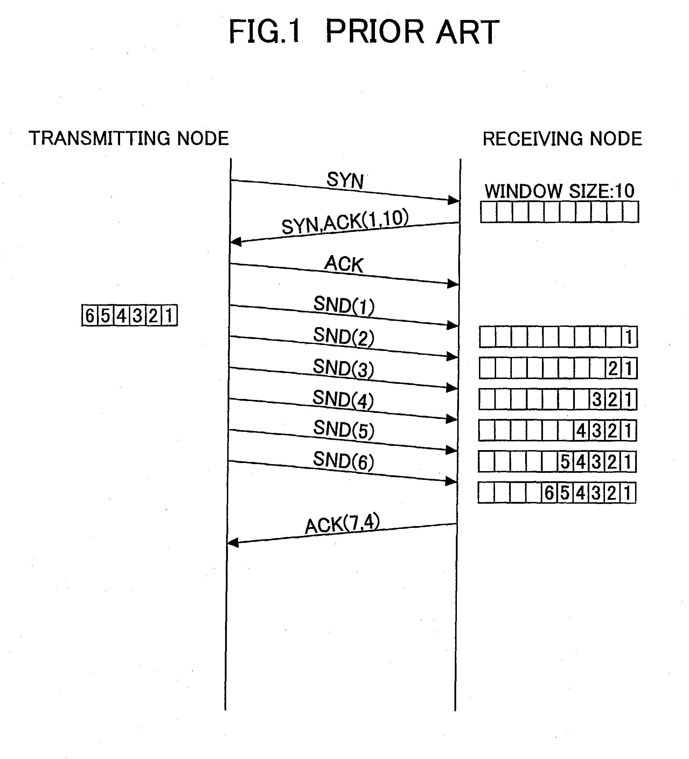

Specifically, as shown in FIG. 1, when a transmitting node transmits a connection request (SYN) to a receiving node, the receiving node transmits to the transmitting node a connection establishment response (ACK) including information of a free area (window size) in a receiving buffer and a connection establishment request (SYN) with respect to the transmitting node. It should be noted that, in ACK (x, y), "x" represents information of the order of a packet to be requested next to the transmitting node, and "y" represents the window size. Here, the content of the ACK is ACK (1, 10).

In response to reception of the connection establishment response including the information of the window size and the connection establishment request, the transmitting node returns a response (ACK). In addition, based on the notified window size, the transmitting node determines the number of packets that can be consecutively transmitted to the receiving node without waiting for reception confirmation from the receiving node. In this case, the window size is "10", and the number of packets that the transmitting node wishes to transmit is "6". Accordingly, the transmitting node determines that all of the six packets can be consecutively transmitted to the receiving node without waiting for reception confirmation from the receiving node. Thus, the transmitting node transmits the packets consecutively, and the receiving node receives the packets (indicated by SND(1) through SND(6) in FIG. 1).

After receiving the six packets from the transmitting node, the receiving node transmits to the transmitting node a response (ACK) for requesting the next packet. On this occasion, the content of the ACK is ACK (7, 4) including "7" which is information of the order of a packet to be requested next to the transmitting node, and "4" which is the window size. Based on the ACK (7, 4), the transmitting node determines that the receiving node has received all of the six packets.

In communication adopting the above-mentioned window control of the TCP protocol, in a case where a plurality of consecutive packets are lost, retransmission control is performed as described below.

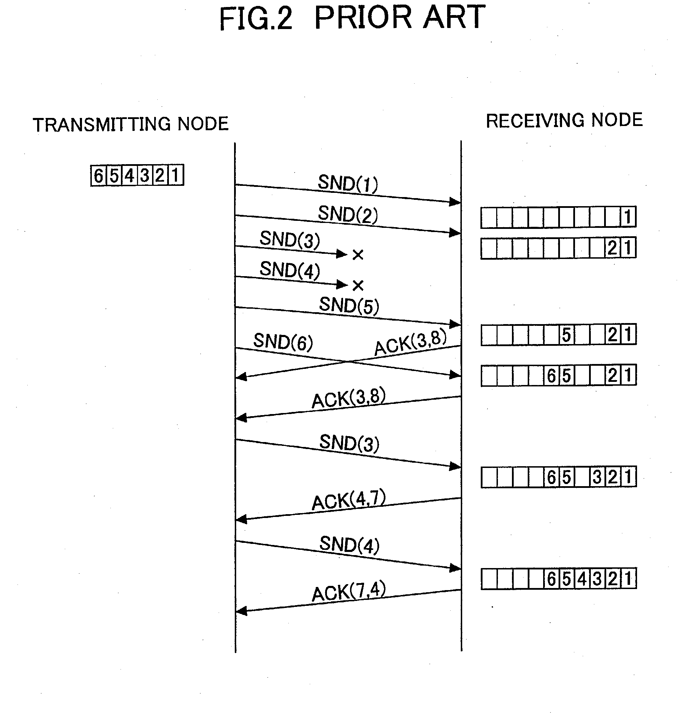

Referring to FIG. 2, the receiving node sequentially receives the packets from the transmitting node. In a case where the consecutive third and fourth packets are lost during communication, however, after receiving the second packets (indicated by the lower SND(2) in FIG. 2), the receiving node receives the fifth packet (indicated by SND(5) in FIG. 1). Hence, the receiving node determines that the third and fourth packets are lost, and returns a response (ACK) to the transmitting node. Additionally, the receiving node returns a similar response (ACK) to the transmitting node when the sixth packet SND(6) is received. The content of the ACK is ACK (3, 8) including "3" which is information of the order of a packet to be requested next to the transmitting node, i.e., the third packet that is the first packet of the lost consecutive packets, and including "8" which is the window size in the case where the third and the following packets are not received. Based on the ACK (3, 8), the transmitting node determines that the receiving node requests the third packet, and retransmits the third packet to the receiving node (indicated by the lower SND(3) in FIG. 2).

Upon reception of the third packet, the receiving node returns, to the transmitting node, ACK (4, 7) including "4" which is information of the order of a packet to be requested next to the transmitting node, i.e., the fourth packet that is lost immediately after the third packet, and including "7" which is the window size in the case where the fourth and the following packets are not received. Based on the ACK (4, 7), the transmitting node determines that the receiving node requests the fourth packet, and retransmits the fourth packet (indicated by the lower SND(4) in FIG. 2).

Upon reception of the fourth packet, since all of the six packets are received, the receiving node returns, to the transmitting node, ACK (7, 4) including "7" which is information of the order of a packet to be requested next to the transmitting node, and "4" which is the window size. Based on the ACK (7, 4), the transmitting node determines that the receiving node has received all of the six packets.

In the above-mentioned retransmission control, however, the transmitting node retransmits the packets one by one that are lost consecutively during communication. Thus, throughput is not improved since it is impossible to take advantage of window control. Accordingly, there is a demand for taking advantage of window control also in retransmission of packets, thereby improving throughput.

### SUMMARY OF THE INVENTION

Accordingly, it is a general object of the present invention to provide an improved and useful communication control method, communication system, and communication apparatus in which one or more of the above-mentioned problems are eliminated.

It is another and more specific object of the present invention to provide a communication control method, a communication system, and a communication apparatus that improve throughput in retransmission of packets.

In order to achieve the above-mentioned objects, according to one aspect of the present invention, there is provided a communication control method of controlling packet communication between a transmitting communication apparatus and a receiving communication apparatus, the method including the steps of:
transmitting to the receiving communication apparatus from the transmitting communication apparatus a plurality of packets in a consecutive manner; and
when packets of the plurality of packets transmitted from the transmitting communication apparatus to the receiving communication apparatus are consecutively lost, reporting to the transmitting communication apparatus from the receiving communication apparatus the number of the consecutively lost packets.

Additionally, according to another aspect of the present invention, there is also provided a communication control method of controlling packet communication between a transmitting communication apparatus and a receiving communication apparatus, the method including the steps of:
transmitting to the receiving communication apparatus from the transmitting communication apparatus a plurality of packets in a consecutive manner; and
when packets of the plurality of packets transmitted from the transmitting communication apparatus to the receiving communication apparatus are consecutively lost, retransmitting to the receiving communication apparatus from the transmitting communication apparatus the lost packets in a consecutive manner.

In addition, according to another aspect of the present invention, there is also provided a communication system that includes:
a receiving communication apparatus including a packet lost reporting part; and
a transmitting communication apparatus including a packet transmitter,
wherein the packet transmitter transmits to the receiving communication apparatus a plurality of packets in a consecutive manner, and
wherein the packet lost reporting part reports to the transmitting communication apparatus, when packets of the plurality of packets transmitted to the receiving communication apparatus are consecutively lost, the number of the consecutively lost packets.

Further, according to another aspect of the present invention, there is also provided a communication system that includes:
a receiving communication apparatus; and
a transmitting communication apparatus including a packet transmitter and a packet retransmitter,
wherein said packet transmitter transmits to the receiving communication apparatus a plurality of packets in a consecutive manner, and
wherein said packet retransmitter retransmits to the receiving communication apparatus, when packets of the plurality of packets transmitted to the receiving communication apparatus are consecutively lost, the consecutively lost packets in a consecutive manner.

Additionally, according to another aspect of the present invention, there is also provided a communication apparatus for receiving packets transmitted from a transmitting communication apparatus and reporting information to the transmitting communication apparatus, the communication apparatus including:
a packet lost reporting part that reports to the transmitting communication apparatus, when packets transmitted from the transmitting communication apparatus are consecutively lost, the number of the consecutively lost packets.

Additionally, according to another aspect of the present invention, there is also provided a communication apparatus for transmitting packets to a receiving communication apparatus and receiving information from the receiving communication apparatus, the communication apparatus including:
a packet transmitter that transmits a plurality of packets to the receiving communication apparatus; and
a packet retransmitter that retransmits to the receiving communication apparatus in a consecutive manner, when packets transmitted to the receiving communication apparatus are consecutively lost, the consecutively lost packets based on order information of a first packet of the lost packets and the number of the lost packets.

According to the present invention, in retransmission of packets, the receiving communication apparatus reports to the transmitting communication apparatus the order information of the first packet of the consecutively lost packets and the number of the consecutively lost packets. That is, instead of reporting a free area in the receiving buffer, the receiving communication apparatus reports the number of the consecutively lost packets. Hence, it becomes possible for the transmitting communication apparatus to determine the number of the consecutively lost packets, which cannot be determined conventionally. In addition, it is possible to improve throughput by retransmitting the consecutively lost packets in a consecutive manner.

Other objects, features and advantages of the present invention will become more apparent from the following detailed description when read in conjunction with the following drawings.

### BRIEF DESCRIPTION OF THE DRAWINGS

FIG. 1 is a sequence diagram showing conventional communication control;
FIG. 2 is a sequence diagram showing conventional retransmission control;
FIG. 3 is a block diagram showing the structure of a communication system according to one embodiment of the present invention; and
FIG. 4 is a sequence diagram showing communication control and retransmission control according to the embodiment of the present invention.

### DETAILED DESCRIPTION OF THE PREFERRED EMBODIMENTS

A description will now be given of an exemplary embodiment of the present invention.

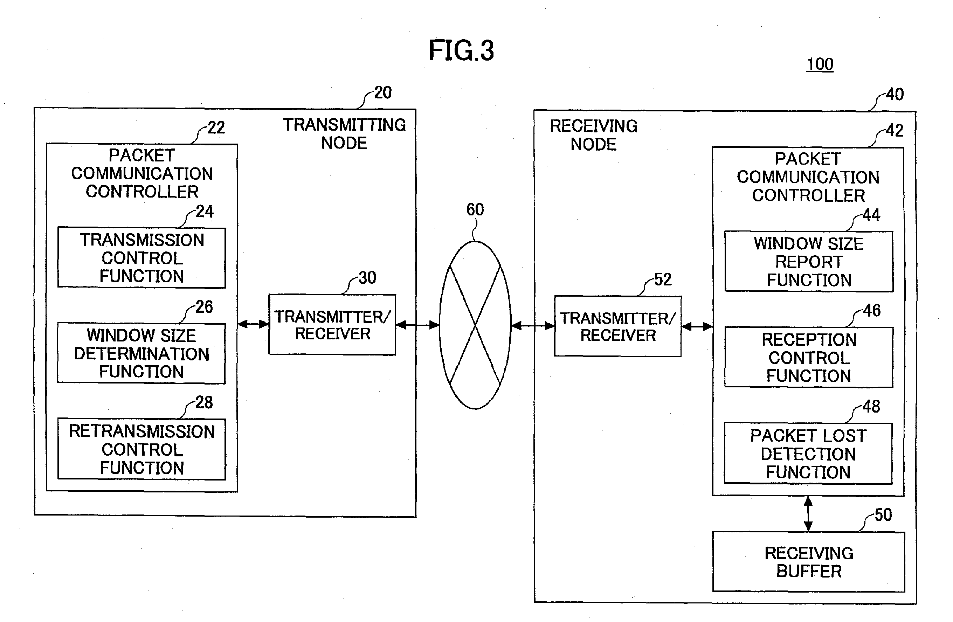

FIG. 3 is a block diagram showing the structure of a communication system 100 according to one embodiment of the present invention. In the communication system 100 shown in FIG. 3, packet communication by window control of the TCP protocol is performed. The communication system 100 is constructed by a transmitting node 20, a receiving node 40, and a communication network 60 connecting the transmitting node 20 and the receiving node 40. The transmitting node 20 and the receiving node 40 are various apparatuses capable of communicating (communication apparatus), such as servers, personal computers, and communication terminals. The communication network 60 is a communication line such as a telephone circuit, a dedicated line, and/or the Internet.

The transmitting node 20 includes a packet communication controller 22 and a transmitter/receiver 30. The packet communication controller 22 is equipped with a transmission control function 24, a window size determination function 26, and a retransmission control function 28.

On the other hand, the receiving node 40 includes a packet communication controller 42, a receiving buffer 50, and a transmitter/receiver 52. The packet communication controller 42 is equipped with a window size report function 44, a reception control function 46, and a packet lost detection function 48.

The transmitting node 20 and the receiving node 40 perform the following processes in packet communication. The transmission control function 24 of the packet communication controller 22 in the transmitting node 20 transmits a connection request to the transmitter/receiver 30 prior to transmission of a packet. The transmitter/receiver 30 transmits the connection request to the receiving node 40 via the communication network 60.

The transmitter/receiver 52 in the receiving node 40 receives and transmits the connection request to the packet communication controller 42. When the connection request is transmitted to the packet communication controller 42, the packet communication controller 42 transmits a connection request to the transmitter/receiver 52 so as to establish a connection with the transmitting node 20. The window size determination function 44 of the packet communication controller 42 transmits to the transmitter/receiver 52 a response (connection establishment response) including information of a free area in the receiving buffer 50. The transmitter/receiver 52 transmits the connection request and the connection establishment response to the transmitting node 20 via the communication network 60.

The transmitter/receiver 30 in the transmitting node 20 receives and transmits the connection request and the connection establishment response to the packet communication controller 22. The transmission control function 24 of the packet communication controller 22 determines that packet communication with the receiving node 40 becomes possible based on the connection establishment response from the transmitter/receiver 30, and transmits to the transmitter/receiver 30 a response (connection establishment response) with respect to the connection request. The transmitter/receiver 30 transmits the connection establishment response to the receiving node 40 via the communication network 60.

The transmitter/receiver 52 in the receiving node 40 receives and transmits the connection establishment response to the packet communication controller 42. Based on the connection establishment response from the transmitter/receiver 52, the reception control function 46 of the packet communication controller 42 determines that the connection is established with the transmitting node 20.

From the information of the window size included in the connection establishment response from the transmitting node 30, the window size determination function 26 of the packet communication controller 22 in the transmitting node 20 determines the number of packets that can be consecutively transmitted to the receiving node 40 without waiting for reception confirmation (acknowledge) from the receiving node 40.

Then, the transmission control function 24 of the packet communication controller 22 transmits to the transmitter/receiver 30 packets of which number is equal to or less than the number of packets that can be consecutively transmitted to the receiving node 40 without waiting for reception confirmation from the receiving node 40. Each of the packets transmitted to the transmitter/receiver 30 includes information representing the order (order information) of the packet. The transmitter/receiver 30 consecutively transmits the packets to the receiving node 40 via the communication network 60.

The transmitter/receiver 52 in the receiving node 40 receives and transmits to the packet communication controller 42 the packets that are transmitted from the transmitting node 20. The reception control function 46 of the packet communication controller 42 stores in the receiving buffer 50 the packets that are transmitted from the transmitter/receiver 52. In addition, when a packet is not transmitted from the transmitter/receiver 52 for a predetermined time, the reception control function 46 of the packet communication controller 42 determines that all of the packets consecutively transmitted from the transmitting node 20 are received. Then, the reception control function 46 transmits to the transmitting node 20 via the communication network 60 a response (reception completion response) including the order information of a packet to be requested next and information of the window size at that time.

The transmitter/receiver 30 in the transmitting node 20 receives and transmits to the packet communication controller 22 the reception completion response. Based on the reception completion response, the packet communication controller 22 determines that the receiving node 40 has received all of the packets that are consecutively transmitted by the transmitting node 20.

The packet lost detection function 48 of the packet communication controller 42 in the receiving node 40 monitors the order information included in the packets that are transmitted from the transmitter/receiver 52 in parallel with the above-mentioned reception process by the reception control function 46. In a case where the order information is not consecutive, the packet lost detection function 48 determines that a packet is lost during the communication. Additionally, in a case where packets are consecutively lost, the packet lost detection function 48 of the packet communication controller 42 transmits to the transmitter/receiver 52 a response (packet lost response) including the order information of the first packet of the consecutively lost packets and information of the number of the lost packets. The transmitter/receiver 52 transmits the packet lost response to the transmitting node 20 via the communication network 60.

The transmitter/receiver 30 in the transmitting node 20 receives and transmits to the packet communication controller 22 the packet lost response. The retransmission function 28 of the packet communication controller 22 determines the first packet to be retransmitted from the order information of the first packet included in the packet lost response. Also, the retransmission control function 28 of the packet communication controller 22 determines the number of packets to be retransmitted based on the number of consecutively lost packets included in the packet lost response.

The retransmission control function 28 of the packet communication controller 22 transmits the consecutively lost packets to the transmitter/receiver 30. The transmitter/receiver 30 consecutively transmits the consecutively lost packets to the receiving node 40 via the communication network 60.

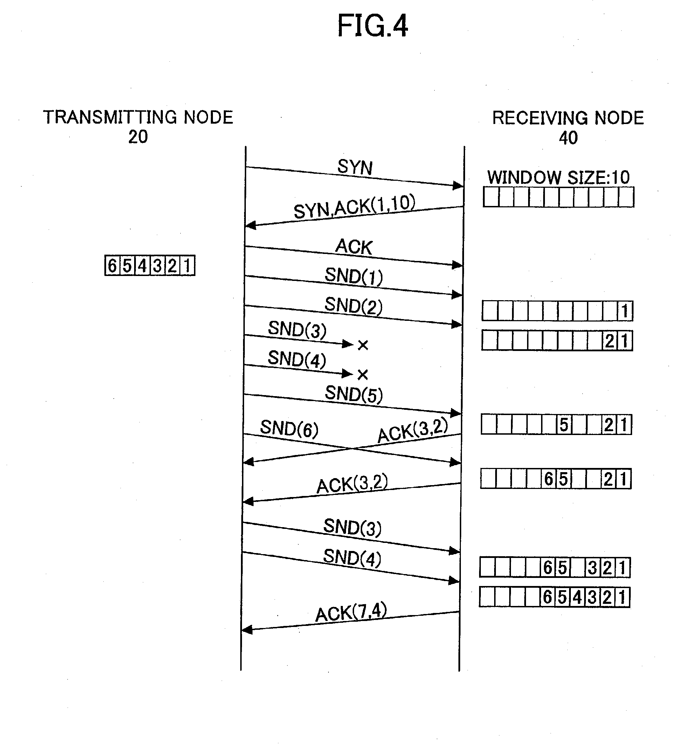

Referring to FIG. 4, a description will now be given of a specific example of packet transmission control and retransmission control by the transmitting node 20 and the receiving node 40.

Prior to packet transmission, the transmitting node 20 transmits a connection request (SYN) to the receiving node 40. Upon reception of the connection request, the receiving node 40 transmits to the transmitting node 20 a connection request (SYN) and a connection establishment response (ACK) including information of a free area (window size) in the receiving buffer 50. In this case, in ACK (x, y), "x" represents the order information of a packet to be requested next by the receiving node 40 to the transmitting node 20, and "y" represents the window size. Here, since the receiving node 40 has not received a packet from the transmitting node 20, the order information of a packet to be requested next with respect to the transmitting node 20 is "1". In addition, it is assumed that the window size is "10". Thus, the content of the connection establishment response (ACK) is ACK (1, 10).

The transmitting node 20 returns a connection establishment response (ACK) to the receiving node 40 in response to the reception of the connection request and the connection establishment response from the receiving node 40. Also, based on the window size included in the received connection establishment response, the transmitting node 20 determines the number of packets that can be consecutively transmitted to the receiving node 40 without waiting for a reception confirmation from the receiving node 40. In this case, it is assumed that the window size is "10" and the number of packets that the transmitting node 20 wishes to transmit is "6". Accordingly, the transmitting node 20 determines that all of the six packets can be consecutively transmitted to the receiving node 40 without waiting for a reception confirmation from the receiving node 40, and consecutively transmits the six packets to the receiving node 40 (SND(1) through SND(6)). The six packets to be transmitted includes the order information of "1" through "6" according to the transmission order.

The receiving node 40 sequentially receives the packets from the transmitting node 20. However, in a case where, among the six packets transmitted by the transmitting node 20, the consecutive third and fourth packets are lost during the communication, the receiving node 40 receives the fifth packet (SND(5)) after receiving the second packet (SND(2)). Hence, the receiving node 40 determines that the third and fourth packets are lost and returns a packet lost response (ACK) to the transmitting node 20. In addition, the receiving node 40 returns a similar packet lost response (ACK) to the transmitting node 20 upon reception of the sixth packet. The contents of these packet lost responses ACKs are ACK (3, 2) including "3" which is the order information of a packet to be requested next to the transmitting node 20 by the receiving node 40, i.e., the third packet that is the first packet of the consecutive lost packets, and including "2" which is the number of the consecutive lost packets.

Based on the packet lost responses (ACK (3, 2)), the transmitting node 20 determines that the receiving node 40 has not received the consecutive two packets starting from the third packet, i.e., the third and fourth packets, and retransmits the third and fourth packets consecutively to the receiving node 40 (SND(3), SND(4)).

The receiving node 40 receives the third and fourth packets. On this occasion, the receiving node 40 is rendered to receive all of the first through sixth packets. When a packet is not transmitted to the receiving node 40 for a predetermined time, the receiving node 40 determines that all of the packets consecutively transmitted from the transmitting node 20 have been received, and returns a reception completion response (ACK (7, 4)) to the transmitting node 20. The ACK (7, 4) includes "7" which is the order information of a packet to be requested next to the transmitting node 20, i.e., the seventh packet, and includes "4" which is the window size.

Based on the reception completion response (ACK (7, 4)), the transmitting node 20 determines that all of the six packets have been received by the receiving node 40.

As mentioned above, in the communication system 100 according to this embodiment, when packets transmitted from the transmitting node 20 are consecutively lost, the receiving node 40 reports to the transmitting node 20 the order information of the first packet of the consecutively lost packets and the number of the consecutively lost packets. In other words, instead of reporting a free area in the receiving buffer 50 as in conventional ways, the receiving node 40 reports to the transmitting node 20 the number of packets that are consecutively lost. Hence, the transmitting node 20 can determine the number of consecutively lost packets, which cannot be determined conventionally. Further, the transmitting node 20 can retransmit the consecutively lost packets not one by one but in a consecutive manner. Thus, it is possible to improve throughput.

Accordingly, with the present invention, it is possible to improve throughput in retransmission of packets.

The present invention is not limited to the specifically disclosed embodiments, and variations and modifications may be made without departing from the scope of the present invention.

## Claims

1. A communication control method of controlling packet communication between a transmitting communication apparatus and a receiving communication apparatus, said method **characterized by** comprising the steps of:
transmitting to the receiving communication apparatus from the transmitting communication apparatus a plurality of packets in a consecutive manner; and
when packets of the plurality of packets transmitted from the transmitting communication apparatus to the receiving communication apparatus are consecutively lost, reporting to the transmitting communication apparatus from the receiving communication apparatus the number of the consecutively lost packets.

2. The communication control method as claimed in claim 1, **characterized by** further comprising the step of:
retransmitting to the receiving communication apparatus from the transmitting communication apparatus the lost packets in a consecutive manner.

3. The communication control method as claimed in claim 1, **characterized by** further comprising the step of:
determining that the receiving communication apparatus has not received the consecutively lost packets based on the report of the number of the consecutively lost packets.

4. The communication control method as claimed in claim 1, **characterized by** further comprising the step of:
retransmitting to the receiving communication apparatus from the transmitting communication apparatus the consecutively lost packets in a consecutive manner based on the report of the number of the consecutively lost packets.

5. The communication control method as claimed in claim 1, wherein the step of reporting further reports order information of a first packet of the consecutively lost packets.

6. The communication control method as claimed in claim 5, **characterized by** further comprising the step of:
determining that the receiving communication apparatus has not received the consecutively lost packets based on the order information and the number of the consecutively lost packets.

7. The communication control method as claimed in claim 5, **characterized by** further comprising the step of:
retransmitting to the receiving communication apparatus from the transmitting communication apparatus the consecutively lost packets in a consecutive manner based on the order information and the number of the consecutively lost packets.

8. The communication control method as claimed in claim 1, **characterized by** further comprising the step of:
reporting to the transmitting communication apparatus from the receiving communication apparatus a free area in a receiving buffer, and
wherein the step of transmitting a plurality of packets transmits in a consecutive manner a plurality of packets that can be stored in the receiving buffer.

9. The communication control method as claimed in claim 1, wherein the packet communication uses window control of the TCP protocol.

10. A communication control method of controlling packet communication between a transmitting communication apparatus and a receiving communication apparatus, said method **characterized by** comprising the steps of:
transmitting to the receiving communication apparatus from the transmitting communication apparatus a plurality of packets in a consecutive manner; and
when packets of the plurality of packets transmitted from the transmitting communication apparatus to the receiving communication apparatus are consecutively lost, retransmitting to the receiving communication apparatus from the transmitting communication apparatus the consecutively lost packets in a consecutive manner.

11. The communication control method as claimed in claim 10, **characterized by** further comprising the steps of:
reporting to the transmitting communication apparatus from the receiving communication apparatus a free area in a receiving buffer,
wherein the step of transmitting a plurality of packets transmits in a consecutive manner a plurality of packets that can be stored in the receiving buffer.

12. The communication control method as claimed in claim 10, wherein the packet communication uses window control of the TCP protocol.

13. A communication system, **characterized by** comprising:
a receiving communication apparatus including a packet lost reporting part; and
a transmitting communication apparatus including a packet transmitter,
wherein said packet transmitter transmits to said receiving communication apparatus a plurality of packets in a consecutive manner, and
wherein said packet lost reporting part reports to said transmitting communication apparatus, when packets of the plurality of packets transmitted to the receiving communication apparatus are consecutively lost, the number of the consecutively lost packets.

14. The communication system as claimed in claim 13,
wherein the transmitting communication apparatus further includes a packet retransmitter, and
wherein said packet retransmitter retransmits to the receiving communication apparatus the consecutively lost packets in a consecutive manner.

15. The communication system as claimed in claim 13, wherein the transmitting communication apparatus determines that the receiving communication apparatus has not received the consecutively lost packets based on the report of the number of the consecutively lost packets.

16. The communication system as claimed in claim 13,
wherein the transmitting communication apparatus further includes a packet retransmitter, and
wherein said packet retransmitter retransmits to the receiving communication apparatus the consecutively lost packets in a consecutive manner based on the report of the number of the consecutively lost packets.

17. The communication control method as claimed in claim 13, wherein the packet lost reporting part further reports order information of a first packet of the consecutively lost packets.

18. The communication system as claimed in claim 17, wherein the transmitting communication apparatus determines that the receiving communication apparatus has not received the consecutively lost packets based on the order information and the number of the consecutively lost packets.

19. The communication system as claimed in claim 17,
wherein the transmitting communication apparatus further includes a packet retransmitter, and
wherein said packet retransmitter retransmits to the receiving communication apparatus the consecutively lost packets in a consecutive manner based on the order information and the number of the consecutively lost packets.

20. The communication system as claimed in claim 13,
wherein the receiving communication apparatus reports to the transmitting communication apparatus a free area in a receiving buffer, and
wherein the packet transmitter transmits in a consecutive manner a plurality of packets that can be stored in the receiving buffer.

21. The communication system as claimed in claim 13, wherein the transmitting communication apparatus and the receiving communication apparatus perform packet communication using window control of the TCP protocol.

22. A communication system, **characterized by** comprising:
a receiving communication apparatus; and
a transmitting communication apparatus including a packet transmitter and a packet retransmitter,
wherein said packet transmitter transmits to the receiving communication apparatus a plurality of packets in a consecutive manner, and
wherein said packet retransmitter retransmits to the receiving communication apparatus, when packets of the plurality of packets transmitted to the receiving communication apparatus are consecutively lost, the consecutively lost packets in a consecutive manner.

23. The communication system as claimed in claim 22,
wherein the receiving communication apparatus reports to the transmitting communication apparatus a free area in a receiving buffer, and
wherein the packet transmitter transmits in a consecutive manner a plurality of packets that can be stored in the receiving buffer.

24. The communication system as claimed in claim 22, wherein the transmitting communication apparatus and the receiving communication apparatus perform packet communication using window control of the TCP protocol.

25. A communication apparatus for receiving packets transmitted from a transmitting communication apparatus and reporting information to the transmitting communication apparatus, said communication apparatus **characterized by** comprising:
a packet lost reporting part that reports to the transmitting communication apparatus, when packets transmitted from the transmitting communication apparatus are consecutively lost, the number of the consecutively lost packets.

26. The communication apparatus as claimed in claim 25, wherein the packet lost reporting part further reports order information of a first packet of the consecutively lost packets.

27. The communication apparatus as claimed in claim 25, **characterized by** further comprising:
a free area reporting part that reports to the transmitting communication apparatus a free area in a receiving buffer.

28. The communication apparatus as claimed in claim 25, wherein the communication apparatus performs packet communication using window control of the TCP protocol.

29. A communication apparatus for transmitting packets to a receiving communication apparatus and receiving information from the receiving communication apparatus, said communication apparatus **characterized by** comprising:
a packet transmitter that transmits a plurality of packets to the receiving communication apparatus in a consecutive manner; and
a packet retransmitter that retransmits to the receiving communication apparatus in a consecutive manner, when packets transmitted to the receiving communication apparatus are consecutively lost, the consecutively lost packets based on order information of a first packet of the lost packets and the number of the lost packets.

30. The communication apparatus as claimed in claim 29, wherein the packet transmitter transmits in a consecutive manner a plurality of packets that can be stored in a receiving buffer of the receiving communication apparatus.

31. The communication apparatus as claimed in claim 29, wherein the communication apparatus performs packet communication using window control of the TCP protocol.
